# EUROPÄISCHE PATENTSCHRIFT

(11) **EP 0 687 227 B1**
(45) Veröffentlichungstag und Bekanntmachung des Hinweises auf die Patenterteilung: **04.03.1998**
(21) Anmeldenummer: 95904537.8
(22) Anmeldetag: 27.12.1994
(51) Int. Cl.: B60P 7/14, B61D 45/00

(54) **VORRICHTUNG ZUM SCHUTZ DES LADEGUTES IN TRANSPORTEINHEITEN**
DEVICE FOR PROTECTING THE LOAD IN TRANSPORT UNITS
DISPOSITIF POUR LA PROTECTION DU CHARGEMENT DANS LES UNITES DE TRANSPORT

(30) Priorität: 08.01.1994 DE 4400394
(43) Veröffentlichungstag der Anmeldung: 20.12.1995
(73) Patentinhaber: ABB Henschel AG, 68309 Mannheim (DE)
(72) Erfinder: WACKERMANN, Peter, D-31515 Wunstorf (DE); KRAMER, Ulrich, D-32425 Minden (DE); KÖHLER, Günter, D-57074 Siegen (DE); WAGENER, Paul-Werner, D-57250 Netphen (DE)
(74) Vertreter: Rupprecht, Klaus, Dipl.-Ing.
(86) Internationale Anmeldenummer: EP9404321
(87) Internationale Veröffentlichungsnummer: WO9518726

(56) Entgegenhaltungen:
- EP-A- 0 293 284
- DE-A- 3 020 025
- FR-A- 2 636 021
- US-A- 2 360 029
- US-A- 3 177 816
- US-A- 3 745 934
- US-A- 4 089 274

## Beschreibung

Die Erfindung betrifft eine Vorrichtung zum Schutz des Ladegutes in Transporteinheiten, vorzugsweise Eisenbahngüterwagen, gegen in Längsrichtung auftretende Stöße, bestehend aus zwischen den Ladegutstapeln anzuordnenden Zwischenwänden, die über Laufrollen an einer in Wagenlängsachse oben im Wagenkasten angeordnete Laufschiene im Wagenkasten aufgehängt und oben und unten mittels Raster beliebig festlegbar sind.

Stückgutstapel, die in Schienen- oder Straßenfahrzeugen festgelegt werden sollen, werden vorzugsweise auf Flachpaletten aufgeschichtet sein.

Die einfachsten, bekannten Vorrichtungen zum Festlegen dieser mit Gütern belegten Flachpaletten sind so gestaltet, daß unterschiedliche Ladehöhen und verbleibende Leerräume einzeln durch Abstützvorrichtungen oder Verstrebungen abgefangen oder auch Luftkissen in verbleibende Hohlräume eingesetzt werden. Es ist auch bekannt, Gurte mit eingewebten Gummiteilen quer durch die Fahrzeuge zu spannen und an besonderen Einrastschienen zu befestigen.

Eine Vorrichtung der eingangs genannten Art ist aus der US-A-23 60 029 bekannt, bei der Zwischenwänden auf Rollen in die jeweilige Position bewegbar sind und mittels in Rasterschienen im Wagenboden ein- und ausrückbarer Bolzen am Boden und in den Obergurten festlegbar sind.

Die an den Zwischenwänden befindlichen Rollen laufen auf einer in Wagenlängsachse oben im Wagenkasten angeordneten Schiene. Hierdurch ist die als Trennwand dienende jeweilige Zwischenwand längsverschiebbar. Mit Hilfe dieser Trennwände kann die Transporteinheit in einzelne Abteile unterteilt werden, so daß der Wagen auch teilweise beladen werden kann.

Nachteilig bei diesen bisher bekannten Zwischenwänden, die mittels ein- und ausrückbarer Bolzen im Wagenboden und in den Obergurten festlegbar sind, ist die Vielzahl der mechanisch bewegbaren, gleitenden Bolzen, sowie deren Betätigungseinrichtungen, die die Wirtschaftlichkeit der Zwischenwände mindern. Ein weiterer Nachteil der bekannten Ausführungen ist darin zu sehen, daß durch die zum Verschieben der Zwischenwände erforderliche Bodenfreiheit der Zwischenwände ein Verklemmen des Ladegutes unter den Zwischenwänden nach einem Auflaufstoß ermöglicht.

Aufgabe der Erfindung ist es, eine Vorrichtung der eingangs genannten Art so auszubilden, daß diese mit einfachsten Mitteln wirtschaftlich herstellbar ist, daß das Festlegen und Lösen der Zwischenwände einfach und sicher erfolgen kann und das ein Verklemmen von Ladegut unter den Zwischenwänden vermieden wird.

Diese Aufgabe wird gemäß der Erfindung dadurch gelöst, daß jede Zwischenwand über ihre Lagerung auf der Laufschiene aus den Rasterschienen anhebbar und verschiebbar und in die Rasterschienen absenkbar und verriegelbar ausgebildet ist.

Entsprechend einer bevorzugten Ausführungsform der Erfindung weist die Laufschiene in Wagenlängsachse einen Mittelsteg und zwei beidseitig des Mittelsteges angeordnete Laufflächen auf, wobei auf jeder Lauffläche zwei hintereinander angeordnete, die Zwischenwand tragende Laufrollen angeordnet sind.

Eine vorteilhafte Weiterbildung der Erfindung sieht vor, daß die zwei hintereinander angeordneten Laufrollen jeweils an zwei Enden eines Dreieckhebels drehbar gelagert sind, dessen drittes, nach unten ragendes Ende drehfest auf einer horizontal und quer in der Zwischenwand drehbar gelagerten Verstellwelle befestigt ist.

Die Verstellwelle ist entsprechend einer sehr zweckmäßigen Weiterbildung der Erfindung drehschlüssig mit einer unterhalb davon in der Zwischenwand drehbar gelagerten Betätigungswelle verbunden, die mindestens einen drehfest mit der Betätigungswelle verbundenen Betätigungsgriff aufweist.

Gemäß einer weiteren vorteilhaften Ausgestaltung der Erfindung ist die Verstellwelle mit der Betätigungswelle über Kettenräder und mindestens eine Kette drehfest verbunden.

Durch die Erfindung ist auf einfache Weise eine vorteilhafte Vorrichtung zur Sicherung und zum Schutz des Ladegutes in Transporteinheiten geschaffen, die wirtschaftlich herstellbar ist, deren bewegliche Teile auf ein Minimum reduziert sind und bei der ein Verklemmen des Ladegutes unter den Zwischenwänden sicher vermieden wird.

Diese und weitere vorteilhafte Ausgestaltungen und Verbesserungen der Erfindung sind Gegenstand der Unteransprüche.

Anhand eines in der schematischen Zeichnung dargestellten Ausführungsbeispiels sollen vorteilhafte Ausgestaltungen und Verbesserungen sowie besondere Vorteile der Erfindung näher erläutert und beschrieben werden.

Es zeigen:

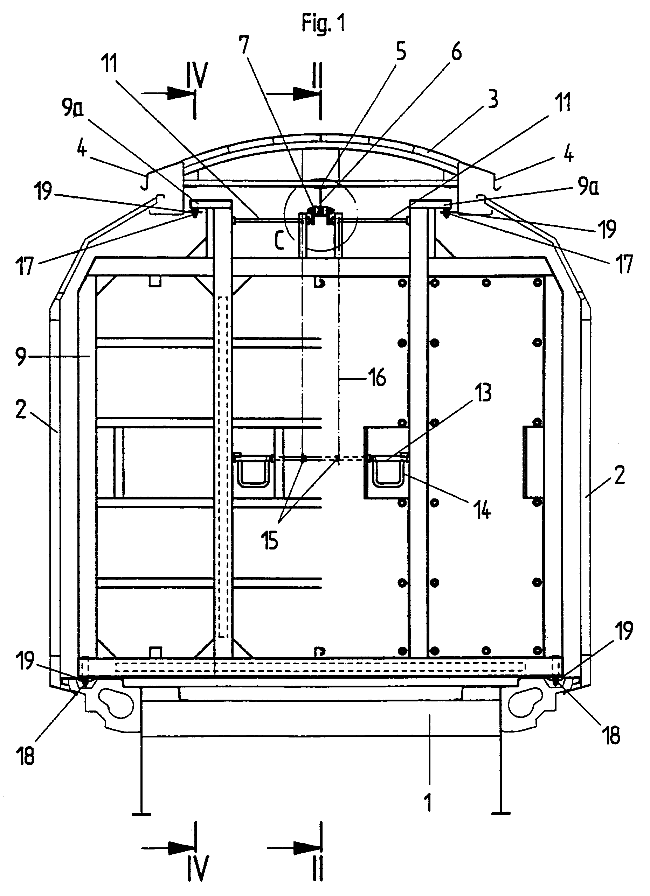

Fig. 1 Den Querschnitt durch einen Eisenbahngüterwagen in schematischer Darstellung mit der Vorrichtung gemäß der Erfindung

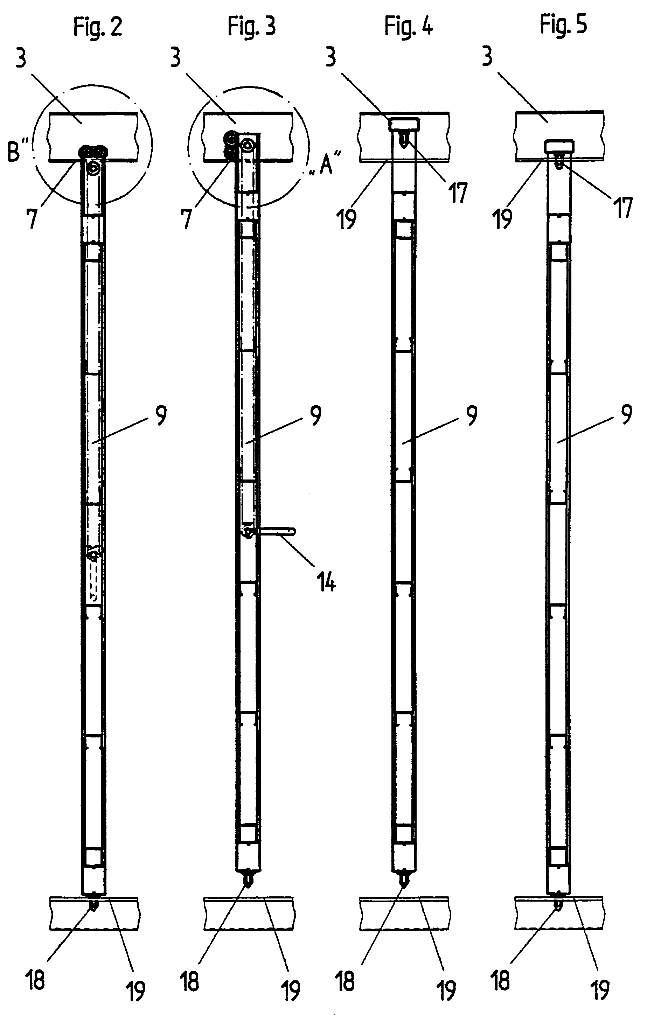

Fig. 2 Den Schnitt nach Linie II-II der Fig 1 mit der Vorrichtung in festgelegter Stellung
Fig. 3 Den Schnitt nach Fig 2 mit der Vorrichtung in angehobener Stellung
Fig. 4 Den Schnitt nach Linie IV-IV der Fig 1 mit der Vorrichtung nach Fig 1 in angehobener Stellung
Fig. 5 Den Schnitt nach Fig 4 mit der Vorrichtung in festgelegter Stellung

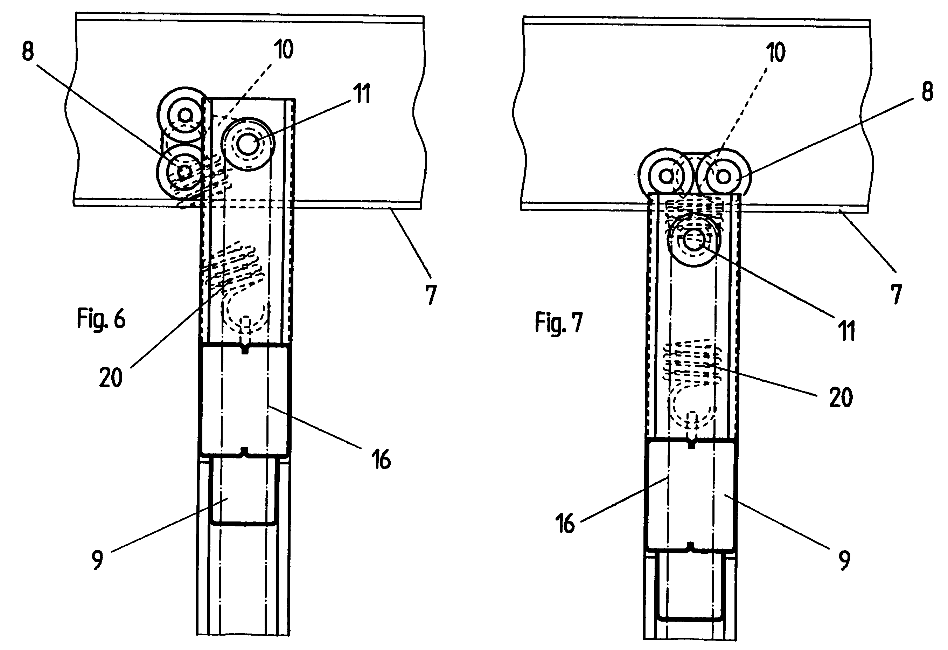

Fig. 6 Die Einzelheit "A" der Fig 3 in vergrößerter Darstellung
Fig. 7 Die Einzelheit "B" der Fig 2 in vergrößerter Darstellung

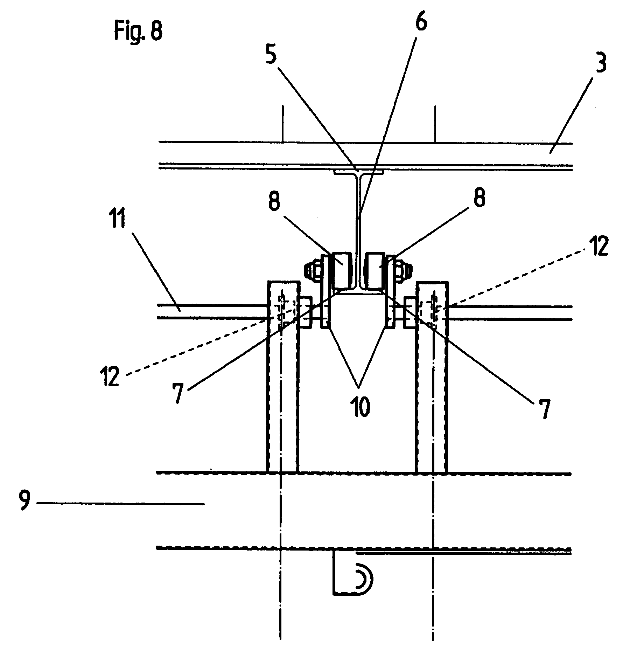

Fig. 8 Die Einzelheit "C" der Fig 1 in vergrößerter Darstellung

Die Vorrichtung gemäß der Erfindung ist in der Zeichnung in einem Eisenbahngüterwagen dargestellt. Der im Querschnitt im wesentlichen aus dem Untergestell (1), den verschiebbaren Seitenwänden (2) und dem Dach (3) mit seinen Längsobergurten (4) bestehende Wagenkasten des Eisenbahngüterwagens weist im Dach in der Mittellängsachse eine durchgehend angeordnete Laufschiene (5) auf. Die Laufschiene (5) trägt unten beidseitig ihres Mittelsteges (6) je eine horizontale Lauffläche (7). Auf diesen Laufflächen (7) ist über Laufrollen (8) eine Zwischenwand (9) aufgehängt. Die Zwischenwand (9) ist erfindungsunwesentlich aus Blech-Walz-Profilen mit einer Sperrholzbeplankung hergestellt. Die Laufrollen (8) lagern um eine horizontale Achse drehbar hintereinander an je einem Dreieckhebel (10), der mit seinem dritten nach unten weisenden Ende drehfest auf je einer horizontal quer in der Zwischenwand (9) drehbar gelagerten Welle (11) drehfest befestigt ist. (In einem Alternativausführungsbeispiel der Erfindung können die Wellen (11) durchgehend und einteilig ausgebildet sein.)

Auf jeder Welle (11) ist weiter drehfest ein Kettenrad (12) befestigt. Unterhalb der Wellen (11) etwa in Höhenmitte der Zwischenwand (9) ist eine Betätigungswelle (13) horizontal quer und drehbar in der Zwischenwand (9) gelagert.

Die Betätigungswelle (13) trägt drehfest mindestens einen Betätigungsgriff (14) und weiter zwei Kettenräder (15), deren jedes über eine Gliederkette (16) drehschlüssig mit dem entsprechenden Kettenrad (12) der Welle (11) drehschlüssig verbunden ist.

An der Zwischenwand (9) ist weiter beidseitig der Wagenlängsachse oben an je einem Tragarm (9a) je ein vertikal nach unten weisender Raster (17) fest angeordnet. Unten an der Zwischenwand (9) ist an deren beiden Querenden weiter je ein vertikal nach unten weisender Raster (18) fest angeordnet. In dem Untergestell (1) sowie an den Obergurten (4) des Wagenkastens des Eisenbahngüterwagens sind horizontal und längs Rasterschienen (19) befestigt. Die im Untergestell (1) angeordneten Rasterschienen (19) entsprechen sowohl in ihrer Ausführung, als auch in ihrer Festlegung im Wagenkasten den Rasterschienen (19) des Längsobergurtes (4).

Bei festgelegter Zwischenwand ragen die Raster (17 und 18) in Bohrungen der Rasterschienen (19). Diese, in der Zeichnung nicht im Einzelnen dargestellten Bohrungen sind mit kurzen Abständen hintereinander in jeder Rasterschiene (19) jeweils in gleicher Vertikalebene hintereinander angeordnet.

Zum Lösen der Zwischenwand (9) aus ihrer festgelegten Stellung und zum Verschieben wird der Betätigungsgriff (14) um ca. 90° nach oben verschwenkt.

Über die Betätigungswelle (13), Kettenräder (15), Gliederkette (16), Kettenräder (12) und Wellen (11) werden die Dreieckhebel (10) ebenfalls um 90° verschwenkt. Bei diesem Verschwenken der Dreieckhebel (10) stützten sich diese auf je eines der Laufräder (8) ab und heben die Zwischenwand (9) mit ihren Rastern (17 und 18) aus den Rasterschienen (19) der Längsobergurte (4) und des Untergestells (1). In dieser angehobenen Stellung kann die Zwischenwand (9) jetzt mit den sich auf die Laufflächen (7) der Laufschiene (5) abstützenden Laufrollen (8) längs im Wagenkasten in die gewünschte Stellung verschoben werden. Nach Erreichen der gewünschten Stellung werden die Betätigungsgriffe (14) wieder nach unten geschwenkt, wobei sich die Zwischenwand (9) mit ihren Raster (17 und 18) auf die Rasterschienen (19) absetzt. Durch leichtes Andrücken der Zwischenwand (9) Auflaufstoß rutscht die Zwischenwand (9) mit ihren Rastern (17 und 18) auf den Rasterschienen (19) in deren Bohrungen und senkt sich selbsttätig in die Festlegestellung ab.

Zum Erleichtern des Anhebens der Zwischenwand (9) aus ihrer Verriegelungsstellung ist jeder Dreieckhebel (10) mit der Zwischenwand (9) weiter über eine vorgespannte Zugfeder (20) verbunden, die als Federspeicher wirkt.

## Patentansprüche

1. Vorrichtung zum Schutz des Ladegutes in Transporteinheiten, vorzugsweise Eisenbahngüterwagen, gegen in Längsrichtung auftretende Stöße, bestehend aus zwischen den Ladegutstapeln anzuordnenden Zwischenwänden (9), die über Laufrollen (8) an einer in Wagenlängsachse oben im Wagenkasten angeordneten Laufschiene (5) im Wagenkasten aufgehängt und oben und unten mittels Raster (17 und 18) beliebig festlegbar sind, dadurch gekennzeichnet, daß jede Zwischenwand (9) über ihre Lagerung auf der Laufschiene (5) aus den Rasterschienen (19) anhebbar und verschiebbar und in die Raster absenkbar und verriegelbar ausgebildet ist.

2. Vorrichtung nach Anspruch 1, dadurch gekennzeichnet, daß die Laufschiene (5) in Wagenlängsachse einen Mittelsteg (6) und zwei beidseitig des Mittelsteges (6) angeordnete Laufflächen (7) aufweist und auf jeder Lauffläche (7) zwei hintereinander angeordnete, die Zwischenwand (9) tragende Laufrollen (8) angeordnet sind.

3. Vorrichtung nach den Ansprüchen 1 und 2, dadurch gekennzeichnet, daß die zwei hintereinander angeordneten Laufrollen (8) jeweils an zwei Enden eines Dreieckhebels (10) drehbar gelagert sind, dessen drittes, nach unten ragendes Ende drehfest auf einer horizontal und quer in der Zwischenwand (9) drehbar gelagerten Welle (11) befestigt ist.

4. Vorrichtung nach den Ansprüchen 1 bis 3, dadurch gekennzeichnet, daß die Welle (11) drehschlüssig mit einer unten in der Zwischenwand (9) drehbar gelagerten Betätigungswelle (13) verbunden ist, die drehfest mindestens einen Betätigungsgriff (14) trägt.

5. Vorrichtung nach den Ansprüchen 1 bis 4, dadurch gekennzeichnet, daß die Welle (11) mit der Betätigungswelle (13) über Kettenräder (12 und 15) und mindestens eine Kette (16) drehfest verbunden ist.

## Claims

1. Device for protecting the load in transport units, preferably railway goods wagons, against shocks occurring in the longitudinal direction, consisting of intermediate walls (9) which are to be arranged between the load stacks and which are suspended in the wagon body via running rollers (8) on a running rail (5) arranged in the wagon body at the top in the longitudinal axis of the wagon and can be fixed at the top and bottom, as desired, by means of catches (17 and 18), characterized in that each intermediate wall (9) is designed so as to be capable of being raised out of the catch rails (19) and displaced via its mounting on the running rail (5) and so as to be capable of being lowered into the catches and locked.

2. Device according to Claim 1, characterized in that the running rail (5) has in the longitudinal axis of the wagon a middle web (6) and two running surfaces (7) arranged on both sides of the middle web (6) and two running rollers (8) arranged one behind the other and carrying the intermediate wall (9) and arranged on each running surface (7).

3. Device according to Claims 1 and 2, characterized in that the two running rollers (8) arranged one behind the other are in each case mounted rotatably at two ends of a triangular lever (10), the third downwardly projecting end of which is fastened fixedly in terms of rotation on a shaft (11) rotatably mounted horizontally and transversely in the intermediate wall (9).

4. Apparatus according to Claims 1 to 3, characterized in that the shaft (11) is rotationally connected to an actuating shaft (13) which is rotatably mounted at the bottom in the intermediate wall (9) and which carries fixedly in terms of rotation at least one actuating grip (14).

5. Device according to Claims 1 to 4, characterized in that the shaft (11) is connected fixedly in terms of rotation to the actuating shaft (13) via chain wheels (12 and 15) and at least one chain (16).

## Revendications

1. Dispositif pour la protection du chargement vis-à-vis de chocs se produisant dans la direction longitudinale dans des unités de transport, de préférence dans des wagons à marchandises, formé de cloisons intermédiaires (9) à disposer entre les piles de marchandises, qui sont suspendues par l'intermédiaire de galets (8) à un rail de roulement (5) situé dans la partie supérieure du wagon, dans la direction de l'axe longitudinal du wagon, et qui peuvent être immobilisées en haut et en bas au choix, à l'aide de doigts de verrouillage (17 et 18), caractérisé par le fait que chaque cloison intermédiaire (9) est agencée de manière à pouvoir être soulevée par rapport aux rails de verrouillage (19) et déplacée ainsi qu'abaissée dans les rails de verrouillage et verrouillée par l'intermédiaire de son système de montage sur le rail de roulement (5).

2. Dispositif selon la revendication 1, caractérisé par le fait que le rail de roulement (5) présente, dans la direction de l'axe longitudinal du wagon, une âme centrale (6) et deux surfaces de roulement (7) de part et d'autre de l'âme centrale (6) et par le fait que deux galets de roulement (8) qui sont disposés l'un derrière l'autre et portent la cloison intermédiaire (9) sont disposés sur chaque surface de roulement (7).

3. Dispositif selon les revendications 1 et 2, caractérisé par le fait que les deux galets de roulement (8) disposés l'un derrière l'autre sont montés tournants respectivement à deux extrémités d'un levier triangulaire (10), dont la troisième extrémité dirigée vers le bas est solidaire en rotation d'un axe horizontal monté tournant, transversalement, dans la cloison intermédiaire (9).

4. Dispositif selon les revendications 1 à 3, caractérisé par le fait que l'axe (11) est solidaire en rotation d'un axe d'actionnement (13) qui est monté tournant dans la cloison intermédiaire (9), à un niveau plus bas, et porte au moins une poignée d'actionnement (14) solidaire en rotation.

5. Dispositif selon les revendications 1 à 4, caractérisé par le fait que l'axe (11) est couplé en rotation à l'axe d'actionnement (13) par l'intermédiaire de pignons à chaîne (12 et 15) et d'au moins une chaîne (16).
